# EUROPEAN PATENT SPECIFICATION

(11) **EP 4 587 330 B1**
(45) Date of publication and mention of the grant of the patent: **29.07.2026**
(21) Application number: 23768536.7
(22) Date of filing: 08.09.2023
(51) Int. Cl.: B64D 27/34, B64D 27/35, B60L 3/00, B60L 53/22, B60L 58/12, B60L 58/21, H02J 1/082, H02J 7/34, H02J 7/50, H02J 7/82

(54) **A SYSTEM AND METHOD FOR CHARGING AN AIRCRAFT**
SYSTEM UND VERFAHREN ZUM LADEN EINES FLUGZEUGS
SYSTÈME ET PROCÉDÉ DE CHARGE D'UN AÉRONEF

(30) Priority: 13.09.2022 SE 2251056
(43) Date of publication of application: 23.07.2025
(73) Proprietor: Heart Aerospace AB, 417 55 Göteborg (SE)
(72) Inventor: FARAG, Bassem, 425 34 Hisings Kärra (SE); AGUILERA MEDINA, Luis Antonio, 414 81 Göteborg (SE); DAHL, Oskar, 423 71 Säve (SE)
(74) Representative: Murgitroyd & Company
(86) International application number: PCT/EP2023/074765
(87) International publication number: WO 2024/056549

(56) References cited:
- EP-A1- 3 624 301
- CA-A1- 3 054 884
- US-A1- 2021 061 110
- US-A1- 2022 009 625
- US-A1- 2022 177 145

## Description

### TECHNICAL FIELD

The present disclosure relates to a system for reconfiguring the power distribution in an aircraft (airplane). The present disclosure also relates to a method for reconfiguring the power distribution in an aircraft.

### BACKGROUND

The propulsion system in an electrically powered airplane is a system that needs to be designed to maintain operation at all times. In order to reduce the risk of catastrophic failure during flight, a plurality of powertrain units may be provided, wherein each powertrain unit has a propulsion unit being powered by an energy storage unit, e.g. a battery. This configuration is suitable for propulsion during flight, but less convenient when charging the energy storage units on the ground.

A drawback with having separate powertrain units with a dedicated energy source is that more complex wiring for charging is required.

EP 3 624 301 A1 discloses a system for reconfiguring power distribution in an aircraft, the system comprises at least two propulsion units, at least two energy storage units, an interconnecting network and a control unit, wherein the interconnecting network is configured to alternate between different operating modes comprising a propulsion mode and a charging mode, wherein the interconnecting network comprises switches which are controlled by the control unit to alternate between the operating modes, wherein the interconnecting network is configured to: create a local direct current, DC, bus between each respective energy storage unit and one of the at least two propulsion units when operating in the propulsion mode; and connect the at least two energy storage units to a common DC bus configured to receive power from a power source when operating in the charging mode, wherein the power source is a ground charging equipment configured to provide power to the system via a charge inlet connection connected to the interconnecting network.

### SUMMARY

Thus, there is a need to provide a system to simplify charging of the energy storage units while maintaining individual powertrain units during flight.

An object of the present disclosure is to provide a system which seeks to mitigate, alleviate, or eliminate one or more of the above-identified deficiencies in the art and disadvantages singly or in any combination and to provide a method for reconfiguring the power distribution in an aircraft.

This object is obtained by a system for reconfiguring power distribution in an aircraft according to claim 1.

This object is also obtained by a method for reconfiguring power distribution in an aircraft according to claim 9.

An advantage with the present invention is that balanced and efficient charging is obtained while maintaining separate feeding of power to each propulsion unit during flight which improves safety.

Further aspects and advantages may be obtained by a skilled person from the detailed description.

### BRIEF DESCRIPTION OF THE DRAWINGS

The foregoing will be apparent from the following more particular description of the example embodiments, as illustrated in the accompanying drawings in which like reference characters refer to the same parts throughout the different views. The drawings are not necessarily to scale, emphasis instead being placed upon illustrating the example embodiments.
Figure 1 illustrates a system for reconfiguring power distribution in an aircraft;
Figure 2a schematically illustrates when the interconnecting network is arranged in the operational mode.
Figure 2b schematically illustrates when the interconnecting network is arranged in the charging mode.
Figures 3a-3c illustrates a first embodiment of an interconnecting network for reconfiguring power distribution in an aircraft;
Figure 4a-4c illustrates a second embodiment of an interconnecting network for reconfiguring power distribution in an aircraft;
Figure 5 is a flow chart illustrating a method for rearranging power distribution in an aircraft.
Figure 6a schematically illustrates when the interconnecting network is arranged in the operational mode for parallel hybrid.
Figure 6b schematically illustrates when the interconnecting network is arranged in the charging mode for parallel hybrid.

### DETAILED DESCRIPTION

Aspects of the present disclosure will be described more fully hereinafter with reference to the accompanying drawings. The system and method disclosed herein can, however, be realized in many different forms and should not be construed as being limited to the aspects set forth herein. Like numbers in the drawings refer to like elements throughout.

The terminology used herein is for the purpose of describing particular aspects of the disclosure only and is not intended to limit the invention. As used herein, the singular forms "a", "an" and "the" are intended to include the plural forms as well, unless the context clearly indicates otherwise.

Some of the example embodiments presented herein are directed towards a system and a method for reconfiguring power distribution in an aircraft.

The aircraft may for example be one or more of: an airplane, a fixed-wing aircraft, a conventional take-off and landing (CTOL) aircraft, in particular an electric conventional take-off and landing (eCTOL) aircraft, a monoplane, and adapted to be flown by a pilot on board the aircraft. The aircraft or airplane may for example comprise one or more of: (braced) wings, a fuselage, an empennage, a cockpit, a passenger cabin, flight control surfaces (such as ailerons, elevators, a rudder, flaps, air brakes, etc.), and a (wheeled and/or retractable) landing gear.

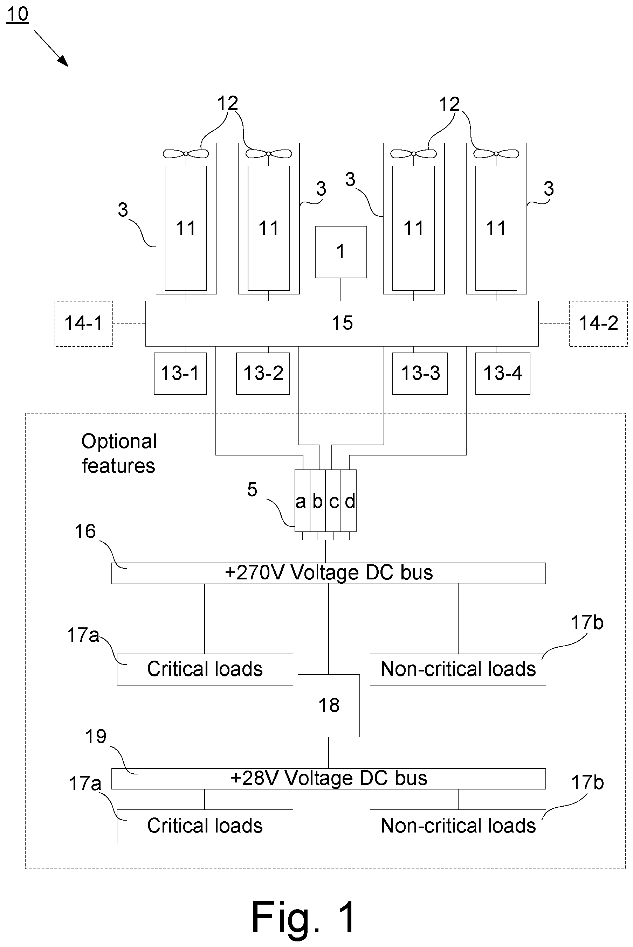

Figure 1 shows an energy distribution system 10 for reconfiguring power distribution in an aircraft and optionally to provide a low voltage DC bus. In this aspect, the wording "low voltage DC bus" is exemplified as a 270V DC bus that may be used to power critical and non-critical loads in an aircraft. Other voltages may be used depending on the actual implementation of system components.

In figure 1, the energy distribution system 10 comprises four propulsion units 3 powered by four energy storage units 13-1, 13-2, 13-3 and 13-4 (commonly denoted 13) via an interconnecting network 15. Each energy storage unit 13 may be any type of unit configured to store electric energy, e.g. a battery or battery pack. Furthermore, two optional auxiliary power supplies 14-1 and 14-2 (commonly denoted 14) are connected to the interconnecting network 15 to provide auxiliary power if needed. Each auxiliary power supply 14 may for example comprise a turbogenerator adapted to supply DC power via a rectifier. Each prolusion unit 3 comprises a drive unit 11 and a propeller 12. The drive unit 11 comprises an alternate current, AC, electric motor (not shown) that receives power via a DC/AC inverter (not shown) from an energy storage unit and/or one of the auxiliary power supplies via the interconnecting network 15 in an operational mode. In some examples, the AC electric motor is an induction motor and the DC/AC inverter is a variable frequency inverter.

The system further comprises a DC/DC converter 5 to energize a common 270VDC bus 16, which supplies power to critical loads 17a and non-critical loads 17b that operates on 270VDC. A further DC/DC converter 18 may be provided to energize a common 28VDC bus 19 that supplies power to critical loads 17a and non-critical loads 17b that operate on 28VDC. Loads are commonly denoted 17 and include both critical 17a and non-critical loads 17.

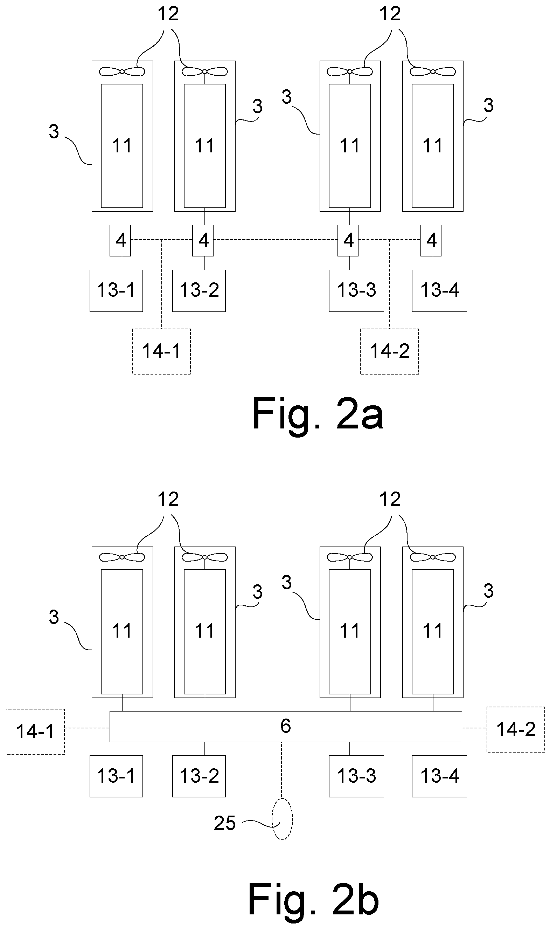

The connections from the propulsion units, auxiliary power supplies and energy storage units to the interconnecting network may comprise one or more power/feeding lines, and as an example one power/feeding line may be connected to a positive terminal of the energy storage unit 13 and one power/feeding line may be connected to a negative terminal of the energy storage unit 13. However, in order to simplify the drawings, a single line is provided in Figures 1, 2a and 2b to illustrate the connections.

The interconnecting network 15 is controlled by a control unit 1 to reconfigure the interconnecting network to operate in at least two modes, wherein the first mode is a propulsion mode, and the second mode is a charging mode. The control unit 1 may for example be a central control unit, or a distributed control unit with several control (sub)units that may be configured to communicate with each other.

In the propulsion mode, each energy storage unit 13 is connected to one propulsion unit 3, as illustrated in Figure 2a and the interconnecting network 15 is reconfigured to provide a local DC bus 4 between one energy storage unit and one propulsion unit. Optionally, the auxiliary power supply 14 may be connected to one or more propulsion units if needed. In this example it is also possible to connect the local DC busses 4 (as indicated by the dotted line) if needed to redistribute energy from an energy storage unit to a propulsion unit 3. This has been disclosed in a co-pending application SE2250982-2 by the same applicant.

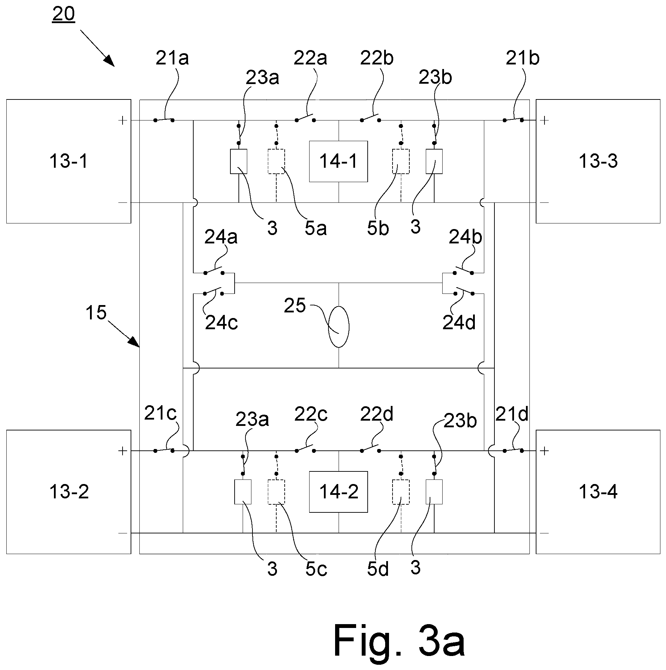

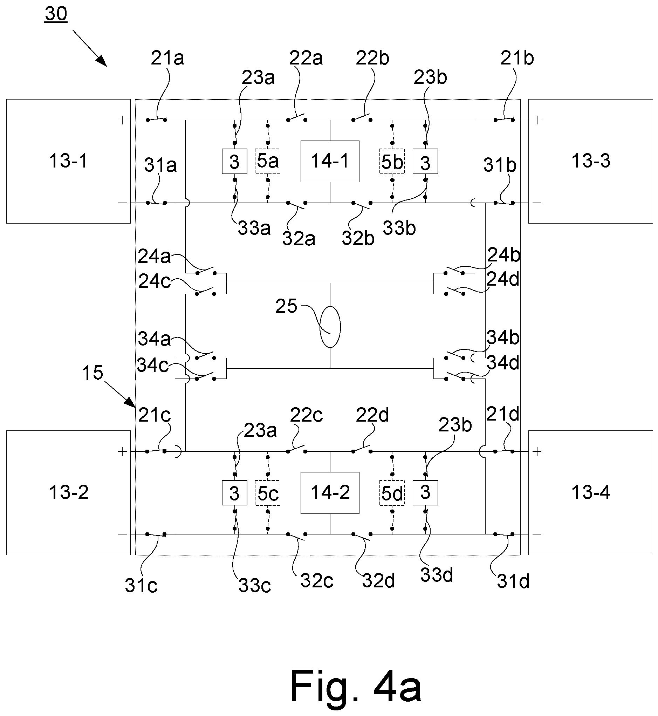

In the charging mode, the interconnecting network 15 is reconfigured to create a common DC bus 6 to which the energy storage units are connected, as illustrated in Figure 2b. The propulsion units 3 may be connected to the common DC bus 6. A power source is connected to the common DC bus to charge one or more of the energy storage units 13. The power source might be one of the energy storage units 13 that have a higher state of charge, SOC, than the other energy storage units, but it is more common that the power source is either one of the auxiliary power supplies 14 (if present) or an external charging equipment (not shown) that is configured to be connected to the common DC bus via a charging inlet connection 25 (see also figures 3a-3c and 4a-4c).

In the description, switches are used to reconfigure the interconnecting network 15 between propulsion units and energy storage units (as well as auxiliary power supplies when such are available in the system). Each switch is configured to open and close the connection in a DC bus configuration to connect/disconnect an energy storage unit, a propulsion unit, a DC/DC converter, or an auxiliary power supply from the feeding/power line. This is illustrated in Figures 3a-3c and 4a-4c.

Figure 3a schematically illustrates a system 20 when the interconnecting network 15 is arranged in propulsion mode. In this configuration, switches are only implemented in the positive feeding line and each energy storage units 13 is connected to one propulsion unit 3 via a local DC bus by closing switches 21a-21d (commonly denoted 21) and 23a-23d (commonly denoted 23), and optionally the energy storage unit 13 is connected to a DC/DC converter 5 by closing a separate switch to energize a low voltage DC bus (see figure 1). No auxiliary power supply 14 is connected to the local DC bus in propulsion mode.

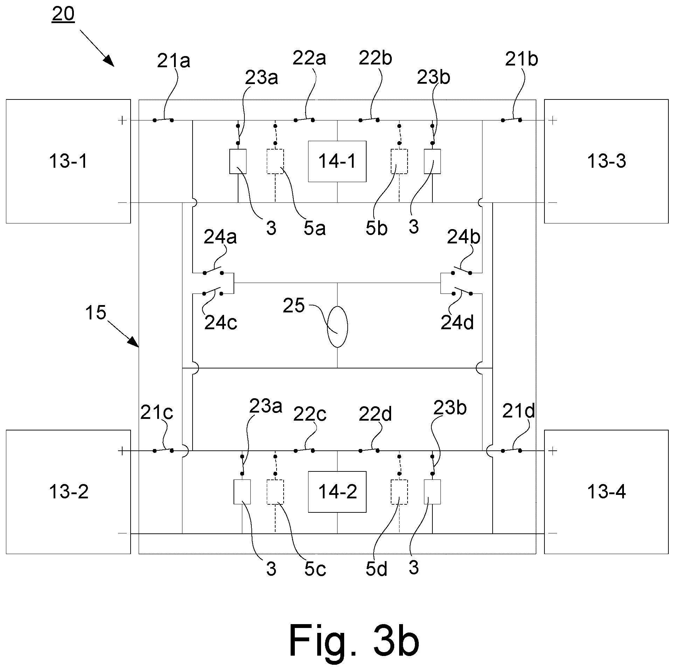

Figure 3b schematically illustrates a system 20 when the interconnecting network 15 is arranged in enhanced propulsion mode. This configuration is similar to the propulsion mode configuration disclosed in Figure 3a, with the addition that each auxiliary power supply 14 is connected to two local DC buses by closing switches 22a -22d (commonly denoted 22). The enhanced propulsion mode is normally used during flight to provide additional power to the propulsion units 3 in excess of the power provided by the energy storage units 13.

Furthermore, the enhanced propulsion mode may be modified into charging mode by charging the energy storage units 13-1 and 13-3 using power provided from the auxiliary power supply 14-1. This may be performed while the aircraft is on the ground and not connected to an external charging equipment.

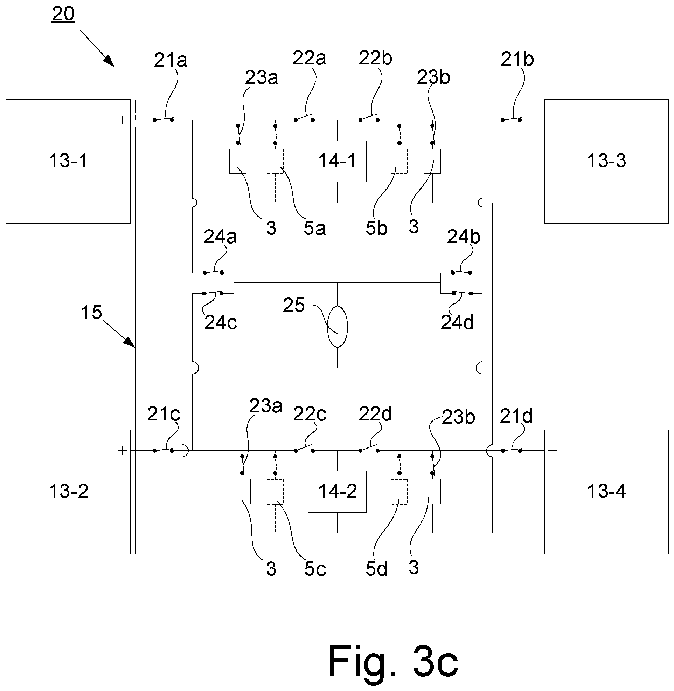

Figure 3c schematically illustrates a system 20 when the interconnecting network 15 is arranged in ground charging mode via the charging inlet connection 25. The auxiliary power supplies 14 (if present) are disconnected from the system by opening switches 22. Charging switches 24a-24d (commonly denoted 24) are closed to create a common DC bus for charging using the local DC busses. As mentioned before, the propulsion units 3 and/or the inverters 5 may be disconnected from the common DC bus if desired.

Only one charging inlet 25 is illustrated in drawings 3a-3c, and additional charging inlets may be included within the charging inlet 25 to allow different types of ground charging equipment to be connected to provide power in charging mode.

Furthermore, each energy storage unit 13 may have a different State-Of-Charge, SOC, when charging mode is selected. If the SOC in the energy storage units is essentially the same (e.g. if the difference in SOC in the energy storage units is below a certain and/or predetermined target value), the charging switches 24 may be closed to connect all energy storage units 13 to the common DC bus. However, if there is a difference in SOC between the energy storage units 13 (e.g. if the difference in SOC between the energy storage units 13 exceeds said target value), the control unit 1 (shown in figure 1) will monitor the SOC of the respective energy storage unit 13 and apply and/or coordinate staged charging to avoid high inrush current. The control unit 1 may for example monitor the SOC as measured by the respective energy storage unit 13. When staged charging is applied, energy storage units 13 are sequentially connected to the common DC bus via each respective charging switch based on the SOC of each respective energy storage unit. Specifically, when staged charging is applied, first the energy storage unit 13 with the lowest SOC will be connected to the common DC bus, to receive power from e.g. said external/ground charging equipment. Once the difference in SOC between this energy storage unit and the energy storage unit with the second lowest SOC is below the target value, the energy storage unit with the second lowest SOC will be connected to the common DC bus, and so on, until all the energy storage units have been connected to the common DC bus. At this point, charging of the energy storage units may continue until a target charging SOC is achieved.

Said target value, at which at least one energy storage unit will be connected, may depend on several variables. The target value will (strongly) depend on the internal resistance of the energy storage units. As the energy storage units have no means to regulate the current in or out, the internal resistance and the voltage difference are the attributes that will determine the magnitude of the current flowing between the energy storage units. The internal resistance of the energy storage unit depends on several variables such as temperature, state of charge, state of health, while the voltage difference only depends on the state of charge difference of the energy storage units. Hence, said target value for energy storage unit(s) interconnection may be a dynamic value that should consider the above-mentioned variables.

Figures 4a-4c describe a system 40 which is similar to the system disclosed in Figures 3a-3c with the exception that dual switches (for positive and negative power/feeding lines) are used to increase safety and reduce the risk of malfunctions.

Figure 4a schematically illustrates a system 30 when the interconnecting network 15 is arranged in propulsion mode. In this configuration, each energy storage units 13 is connected to one propulsion unit 3 via a local DC bus by closing switches 21 and 31a-31d (commonly denoted 31) as well as switches 23 and 33a-33d (commonly denoted 33), and optionally the energy storage unit 13 is connected to a DC/DC converter 5 by closing separate switches to energize a low voltage DC bus (see figure 1). No auxiliary power supply 14 is connected to the local DC bus in propulsion mode.

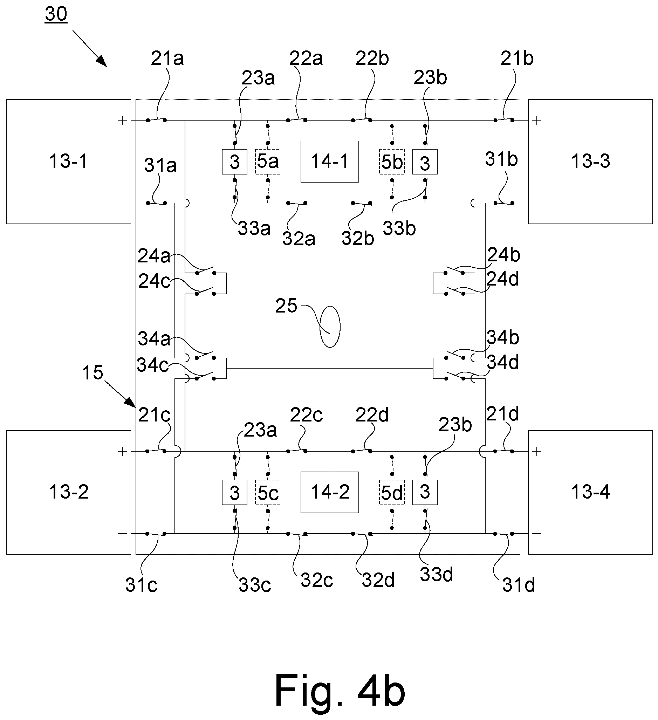

Figure 4b schematically illustrates a system 30 when the interconnecting network 15 is arranged in enhanced propulsion mode. This configuration is similar to the propulsion mode configuration disclosed in Figure 4a, with the addition that each auxiliary power supply 14 is connected to two local DC buses by closing switches22 and 32a -32d (commonly denoted 32). As mentioned above, the enhanced propulsion mode is normally used during flight to provide additional power to the propulsion units 3 in excess of the power provided by the energy storage units 13.

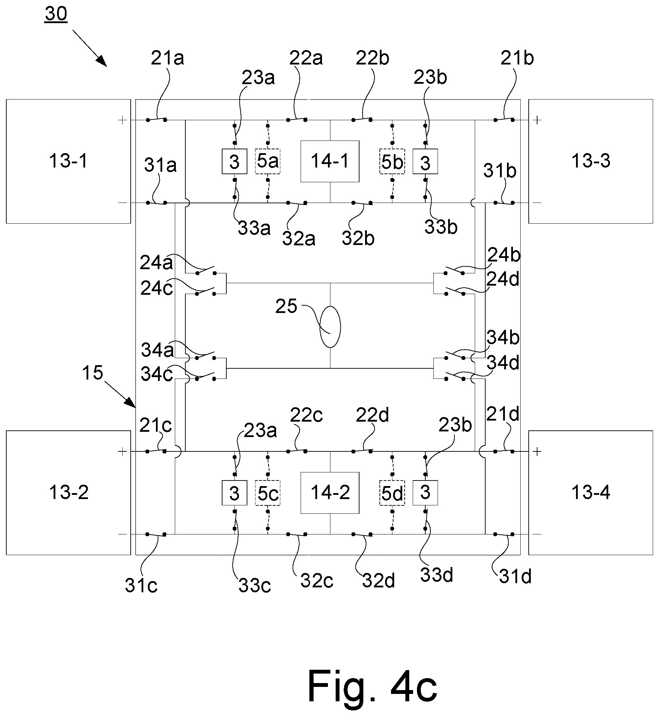

Furthermore, the enhanced propulsion mode may be modified into charging mode by charging the energy storage units 13-1 and 13-3 using power provided from the auxiliary power supply 14-1. This may be performed while the aircraft is on the ground and not connected to an external charging equipment. This situation is illustrated in Figure 4c.

Figure 4c schematically illustrates a system 30 when the interconnecting network 15 is arranged in charging mode when the charging equipment is not connected to the charging inlet connection 25. Each auxiliary power supply 14 provides power by closing switches 22 and 32 to create two common DC busses using the local DC busses, and charging switches are open. As mentioned before, the propulsion units 3 and/or the inverters 5 may be disconnected from the common DC bus if desired.

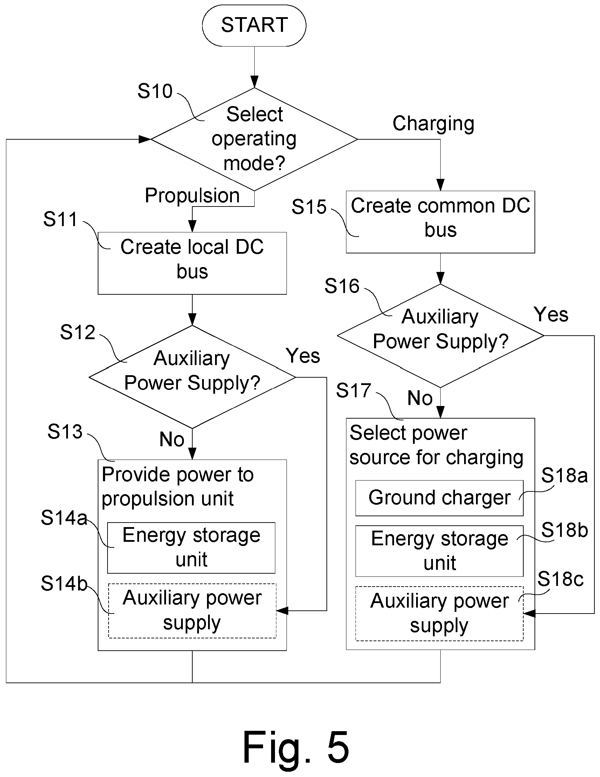

Figure 5 is a flow chart illustrating a method for reconfiguring power distribution in an aircraft comprising a system comprising at least two propulsion units, at least two energy storage units, an interconnecting network and a control unit, wherein the interconnecting network comprises switches which are controlled by the control unit to alternate between operating modes.

In the first step S10, an operating mode is selected from the group of: a propulsion mode and a charging mode; and if propulsion mode is selected, the flow continues to step S11, to create a local direct current, DC, bus by the interconnecting network to which each respective energy storage unit and one of the at least two propulsion units is connected.

In the optional step S12, it is determined if at least one auxiliary power supply is available, if not, the flow continues to step S13, wherein power is provided to each propulsion unit from the connected energy storage unit (step S14a). If an auxiliary power source is available, then in step S13, there is a choice to either use the power provided by the energy storage unit (step 14a) and/or the power provided by the auxiliary power supply (step 14b).

If charging mode is selected, the flow continues to step S15 where at least two energy storage units are connected to a common DC bus created by the interconnecting network and the common DC bus is configured to receive power from a power source. If no auxiliary power supply is available (determined in step S16), the power source for charging is selected in step S17 from the group of ground charging equipment (step S18a) or one of the energy storage units (step S18b). However, if an auxiliary power supply is available, it may be selected (step S18c) to be the power source to charge the energy storage units.

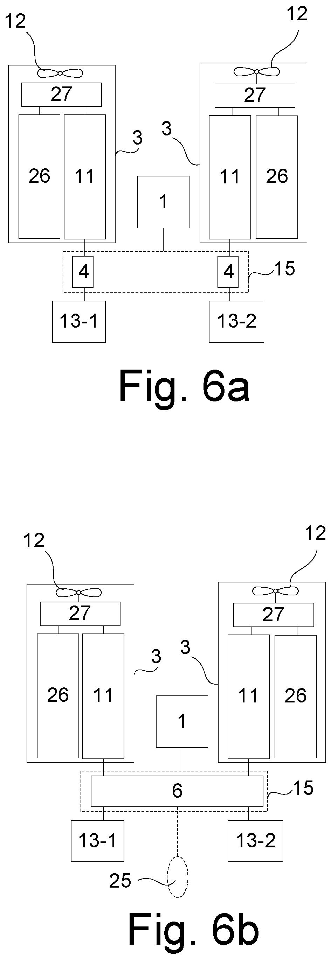

Figures 6a-6b show another energy distribution system 10 for reconfiguring power distribution in an aircraft. Here, the energy distribution system 10 may comprise (exactly) two propulsion units 3, two energy storage units 13-1 and 13-2, and an interconnecting network 15. Each prolusion unit 3 comprises a drive unit 11. The drive unit 11 comprises an AC electric motor (not shown) that receives power via a DC/AC inverter (not shown) from an energy storage unit 13-1 or 13-2 via the interconnecting network 15 in an operational mode. Each prolusion unit 3 further comprises an engine 26 adapted to provide rotary power. The engine 26 may for example be a thermal machine, such as a turbine. The engine 26/thermal machine/turbine may for example be (adapted to be) fuelled by aviation fuel, preferably sustainable aviation fuel. Each prolusion unit 3 further comprises a gearbox 27 and a propeller 12, wherein the drive unit 11 (specifically the AC electric motor thereof) and the engine 26 are coupled to the propeller 12 via the gearbox 27, i.e. parallel hybrid.

The interconnecting network 15 in Figures 6a-6b is controlled by a control unit 1 to reconfigure the interconnecting network to operate in at least two modes, wherein the first mode is a propulsion mode, and the second mode is a charging mode. In the propulsion mode, each energy storage unit 13 is connected to the drive unit 11 of one propulsion unit 3, as illustrated in Figure 6a and the interconnecting network 15 is reconfigured to provide a local DC bus 4 between one energy storage unit and one propulsion unit. In the charging mode, the interconnecting network 15 is reconfigured to create a common DC bus 6 to which the energy storage units 13-1 and 13-2 are connected, as illustrated in Figure 6b. A power source is connected to the common DC bus to charge one or more of the energy storage units 13. The power source will here typically be an external charging equipment (not shown) that is configured to be connected to the common DC bus via a charging inlet connection 25.

Aspects of the disclosure are described with reference to the drawings, e.g., block diagrams and/or flowcharts. It is understood that several entities in the drawings, e.g., blocks of the block diagrams, and also combinations of entities in the drawings, can be implemented by computer program instructions, which instructions can be stored in a computer-readable memory, and also loaded onto a computer or other programmable data processing apparatus. Such computer program instructions can be provided to a processor of a general purpose computer, a special purpose computer and/or other programmable data processing apparatus to produce a machine, such that the instructions, which execute via the processor of the computer and/or other programmable data processing apparatus, create means for implementing the functions/acts specified in the block diagrams and/or flowchart block or blocks.

In some implementations and according to some aspects of the disclosure, the functions or steps noted in the blocks can occur out of the order noted in the operational illustrations. For example, two blocks shown in succession can in fact be executed substantially concurrently or the blocks can sometimes be executed in the reverse order, depending upon the functionality/acts involved. Also, the functions or steps noted in the blocks can according to some aspects of the disclosure be executed continuously in a loop.

The description of the example embodiments provided herein have been presented for purposes of illustration. The description is not intended to be exhaustive or to limit example embodiments to the precise form disclosed, and modifications and variations are possible in light of the above teachings or may be acquired from practice of various alternatives to the provided embodiments as far as they fall into the scope of the appended claims. The examples discussed herein were chosen and described in order to explain the principles and the nature of various example embodiments and its practical application to enable one skilled in the art to utilize the example embodiments in various manners and with various modifications as are suited to the particular use contemplated. The features of the embodiments described herein may be combined in all possible combinations of methods, apparatus, modules, systems, and computer program products as far as they fall into the scope of the appended claims. It should be appreciated that the example embodiments presented herein may be practiced in any combination with each other as far as they fall into the scope of the appended claims.

It should be noted that the word "comprising" does not necessarily exclude the presence of other elements or steps than those listed and the words "a" or "an" preceding an element do not exclude the presence of a plurality of such elements. It should further be noted that any reference signs do not limit the scope of the claims, that the example embodiments may be implemented at least in part by means of both hardware and software, and that several "means", "units" or "devices" may be represented by the same item of hardware.

The various example embodiments described herein are described in the general context of method steps or processes, which may be implemented in one aspect by a computer program product, embodied in a computer-readable medium, including computer-executable instructions, such as program code, executed by computers in networked environments. A computer-readable medium may include removable and non-removable storage devices including, but not limited to, Read Only Memory (ROM), Random Access Memory (RAM), compact discs (CDs), digital versatile discs (DVD), etc. Generally, program modules may include routines, programs, objects, components, data structures, etc. that perform particular tasks or implement particular abstract data types. Computer-executable instructions, associated data structures, and program modules represent examples of program code for executing steps of the methods disclosed herein. The particular sequence of such executable instructions or associated data structures represents examples of corresponding acts for implementing the functions described in such steps or processes.

In the drawings and specification, there have been disclosed exemplary embodiments. However, many variations and modifications can be made to these embodiments without departing from the scope of the appended claims.

## Claims

1. A system (10; 20; 30) for reconfiguring power distribution in an aircraft, the system comprises at least two propulsion units (3), at least two energy storage units (13), an interconnecting network (15) and a control unit (1), wherein the interconnecting network (15) is configured to alternate between different operating modes comprising a propulsion mode and a charging mode, wherein the interconnecting network (15) comprises switches which are controlled by the control unit (1) to alternate between the operating modes, wherein the interconnecting network is configured to:
- create a local direct current, DC, bus (4) between each respective energy storage unit (13) and one of the at least two propulsion units (3) when operating in the propulsion mode; and
- connect the at least two energy storage units (13) to a common DC bus (6) configured to receive power from a power source when operating in the charging mode, wherein the power source is a ground charging equipment configured to provide power to the system via a charge inlet connection (25) connected to the interconnecting network (15),
wherein the system further comprises a plurality of DC/DC converters (5a-d), each connected to a respective energy storage unit of said at least two energy storage units (13-1, 13-2, 13-3, 13-4) via a separate switch of the interconnecting network (15), wherein each DC/DC converter (5a-d) is configured to energize a low voltage DC bus of the system, which low voltage DC bus is configured to power critical and non-critical loads (17a, 17b) of the aircraft during the propulsion mode and the charging mode.

2. The system according to claim 1, wherein the system further comprises at least one auxiliary power supply (14), and the interconnecting network (15) is further configured to operate in an enhanced propulsion mode wherein one of the at least one auxiliary power supply (14) is connected to at least one local DC bus (4) created between each respective energy storage unit (13) and one of the at least two propulsion units (3); and/or the power source is one of the at least one auxiliary power supply (14).

3. The system according to any of claims 1-2, wherein the switches comprise energy storage switches (21; 31) configured to connect/disconnect each energy storage unit to a local DC bus (4) or a common DC bus (6).

4. The system according to any of claims 1-3, wherein the switches further comprise propulsion switches (23; 33) configured to connect/disconnect each propulsion unit (3) from each respective local DC bus (4) in the propulsion mode or the common DC bus in the charging mode.

5. The system according to claim 2, wherein the switches further comprise auxiliary switches (22) configured to connect/disconnect each auxiliary power supply (14) from the local DC bus during enhanced propulsion mode or the common DC bus in the charging mode.

6. The system according to any of claims 1-5, wherein the switches further comprise charging switches (24; 34) configured to create the common DC bus (6) in the charging mode.

7. The system according to any of claims 1-6, wherein the local DC bus and the common DC bus comprises a positive power feeding line and a negative power feeding line, and that the switches of the interconnecting network are arranged on the positive power line and/or the negative power line.

8. The system according to any of claims 1-7, wherein the interconnecting network is configured to create the common DC bus (6) using each respective local DC bus (4).

9. A method for reconfiguring power distribution in an aircraft comprising a system comprising at least two propulsion units (3), at least two energy storage units (13), an interconnecting network (15) and a control unit (1), wherein the interconnecting network (15) comprises switches which are controlled by the control unit (1) to alternate between operating modes, wherein the method comprises the steps of:
- selecting (S10) an operating mode from the group of: a propulsion mode and a charging mode; and
- reconfiguring the interconnecting network to the selected operating mode, wherein the reconfiguration comprises:
- creating (S11) a local direct current, DC, bus between each respective energy storage unit and one of the at least two propulsion units when the selected operating mode is the propulsion mode; and
- connecting (S15) the at least two energy storage units (13) to a common DC bus (6) configured to receive power from a power source when the selected operating mode is the charging mode, wherein the power source is a ground charging equipment configured to provide power to the system via a charge inlet connection (25) connected to the interconnecting network (15),
wherein the system further comprises a plurality of DC/DC converters (5a-d), each connected to a respective energy storage unit of said at least two energy storage units (13-1, 13-2, 13-3, 13-4) via a separate switch of the interconnecting network (15), wherein each DC/DC converter (5a-d) energizes a low voltage DC bus of the system, which low voltage DC bus powers critical and non-critical loads (17a, 17b) of the aircraft during the propulsion mode and the charging mode.

10. The method according to claim 9, wherein the system further comprises at least one auxiliary power supply, and the group of operating mode further comprises: an enhanced propulsion mode wherein one of the at least one auxiliary power supply is connected to at least one local DC bus created between each respective energy storage unit and one of the at least two propulsion units; and/or the power source is one of the at least one auxiliary power supply.

11. The method according to claim 10, wherein the enhanced propulsion mode is modified into another charging mode by charging the energy storage unit (13-1) using power provided from the auxiliary power supply (14-1) when a ground charging equipment is not connected to the charging inlet connection (25).

12. The method according to any one of the claims 9-11, wherein if there is a difference in State-Of-Charge, SOC, between the energy storage units (13) when charging mode is selected, the control unit (1) monitors the SOC of the respective energy storage unit (13) and applies staged charging, and wherein when staged charging is applied, energy storage units (13) are sequentially connected to the common DC bus based on the SOC of each respective energy storage unit.

13. A computer program for reconfiguring power distribution in an aircraft, comprising instructions which, when executed on at least one processor, cause the at least one processor to carry out the method according to any of claims 9-10 or 11-12.

14. A computer-readable storage medium carrying a computer program for reconfiguring power distributions in an aircraft according to claim 13.

15. An aircraft comprising a system according to any one of the claims 1-8.

## Patentansprüche

1. Ein System (10; 20; 30) zum Neukonfigurieren der Leistungsverteilung in einem Flugzeug, wobei das System mindestens zwei Antriebseinheiten (3), mindestens zwei Energiespeichereinheiten (13), ein Verbindungsnetzwerk (15) und eine Steuereinheit (1) beinhaltet, wobei das Verbindungsnetzwerk (15) konfiguriert ist, um zwischen verschiedenen Betriebsmodi zu wechseln, die einen Antriebsmodus und einen Lademodus beinhalten, wobei das Verbindungsnetzwerk (15) Schalter beinhaltet, die von der Steuereinheit (1) gesteuert werden, um zwischen den Betriebsmodi zu wechseln, wobei das Verbindungsnetzwerk konfiguriert ist zum:
- Erzeugen eines lokalen Gleichstrombusses, DC-Busses, (4) zwischen jeder jeweiligen Energiespeichereinheit (13) und einer der mindestens zwei Antriebseinheiten (3), wenn im Antriebsmodus gearbeitet wird; und
- Verbinden der mindestens zwei Energiespeichereinheiten (13) mit einem gemeinsamen DC-Bus (6), der konfiguriert ist, um Leistung von einer Leistungsquelle zu empfangen, wenn im Lademodus gearbeitet wird, wobei die Leistungsquelle eine Bodenladeausrüstung ist, die konfiguriert ist, um dem System über eine Ladeeingangsverbindung (25), die mit dem Verbindungsnetzwerk (15) verbunden ist, Leistung bereitzustellen,
wobei das System ferner eine Vielzahl von DC/DC-Wandlern (5a-d) beinhaltet, die jeweils mit einer jeweiligen Energiespeichereinheit der mindestens zwei Energiespeichereinheiten (13-1, 13-2, 13-3, 13-4) über einen separaten Schalter des Verbindungsnetzwerks (15) verbunden sind, wobei jeder DC/DC-Wandler (5a-d) konfiguriert ist, um einen Niederspannungs-DC-Bus des Systems zu bestromen, welcher Niederspannungs-DC-Bus konfiguriert ist, um kritische und nichtkritische Lasten (17a, 17b) des Flugzeugs während des Antriebsmodus und des Lademodus mit Energie zu versorgen.

2. System gemäß Anspruch 1, wobei das System ferner mindestens eine Hilfsleistungsversorgung (14) beinhaltet und das Verbindungsnetzwerk (15) ferner konfiguriert ist, um in einem verbesserten Antriebsmodus zu arbeiten, wobei eine der mindestens einen Hilfsleistungsversorgung (14) mit mindestens einem lokalen DC-Bus (4) verbunden ist, der zwischen jeder jeweiligen Energiespeichereinheit (13) und einer der mindestens zwei Antriebseinheiten (3) erzeugt wird; und/oder die Leistungsquelle eine der mindestens einen Hilfsleistungsversorgung (14) ist.

3. System gemäß einem der Ansprüche 1-2, wobei die Schalter Energiespeicherschalter (21; 31) beinhalten, die konfiguriert sind, um jede Energiespeichereinheit mit einem lokalen DC-Bus (4) oder einem gemeinsamen DC-Bus (6) zu verbinden/davon zu trennen.

4. System gemäß einem der Ansprüche 1-3, wobei die Schalter ferner Antriebsschalter (23; 33) beinhalten, die konfiguriert sind, um jede Antriebseinheit (3) mit jedem jeweiligen lokalen DC-Bus (4) im Antriebsmodus oder dem gemeinsamen DC-Bus im Lademodus zu verbinden/davon zu trennen.

5. System gemäß Anspruch 2, wobei die Schalter ferner Hilfsschalter (22) beinhalten, die konfiguriert sind, um jede Hilfsleistungsversorgung (14) mit dem lokalen DC-Bus während des verbesserten Antriebsmodus oder dem gemeinsamen DC-Bus im Lademodus zu verbinden/davon zu trennen.

6. System gemäß einem der Ansprüche 1-5, wobei die Schalter ferner Ladeschalter (24; 34) beinhalten, die konfiguriert sind, um den gemeinsamen DC-Bus (6) im Lademodus zu erzeugen.

7. System gemäß einem der Ansprüche 1-6, wobei der lokale DC-Bus und der gemeinsame DC-Bus eine positive Leistungszuführungsleitung und eine negative Leistungszuführungsleitung beinhalten und dass die Schalter des Verbindungsnetzwerks auf der positiven Leistungsleitung und/oder der negativen Leistungsleitung angeordnet sind.

8. System gemäß einem der Ansprüche 1-7, wobei das Verbindungsnetzwerk konfiguriert ist, um den gemeinsamen DC-Bus (6) unter Verwendung jedes jeweiligen lokalen DC-Busses (4) zu erzeugen.

9. Ein Verfahren zum Neukonfigurieren der Leistungsverteilung in einem Flugzeug, das ein System beinhaltet, das mindestens zwei Antriebseinheiten (3), mindestens zwei Energiespeichereinheiten (13), ein Verbindungsnetzwerk (15) und eine Steuereinheit (1) beinhaltet, wobei das Verbindungsnetzwerk (15) Schalter beinhaltet, die von der Steuereinheit (1) gesteuert werden, um zwischen Betriebsmodi zu wechseln, wobei das Verfahren die folgenden Schritte beinhaltet:
- Auswählen (S10) eines Betriebsmodus aus der Gruppe von: einem Antriebsmodus und einem Lademodus; und
- Neukonfigurieren des Verbindungsnetzwerks in den ausgewählten Betriebsmodus, wobei die Neukonfiguration Folgendes beinhaltet:
- Erzeugen (S11) eines lokalen Gleichstrombusses, DC-Busses, zwischen jeder jeweiligen Energiespeichereinheit und einer der mindestens zwei Antriebseinheiten, wenn der ausgewählte Betriebsmodus der Antriebsmodus ist; und
- Verbinden (S15) der mindestens zwei Energiespeichereinheiten (13) mit einem gemeinsamen DC-Bus (6), der konfiguriert ist, um Leistung von einer Leistungsquelle zu empfangen, wenn der ausgewählte Betriebsmodus der Lademodus ist, wobei die Leistungsquelle eine Bodenladeausrüstung ist, die konfiguriert ist, um dem System über eine Ladeeingangsverbindung (25), die mit dem Verbindungsnetzwerk (15) verbunden ist, Leistung bereitzustellen,
wobei das System ferner eine Vielzahl von DC/DC-Wandlern (5a-d) beinhaltet, die jeweils mit einer jeweiligen Energiespeichereinheit der mindestens zwei Energiespeichereinheiten (13-1, 13-2, 13-3, 13-4) über einen separaten Schalter des Verbindungsnetzwerks (15) verbunden sind, wobei jeder DC/DC-Wandler (5a-d) einen Niederspannungs-DC-Bus des Systems bestromt, welcher Niederspannungs-DC-Bus kritische und nichtkritische Lasten (17a, 17b) des Flugzeugs während des Antriebsmodus und des Lademodus mit Energie versorgt.

10. Verfahren gemäß Anspruch 9, wobei das System ferner mindestens eine Hilfsleistungsversorgung beinhaltet und die Gruppe von Betriebsmodi ferner Folgendes beinhaltet: einen verbesserten Antriebsmodus, wobei eine der mindestens einen Hilfsleistungsversorgung mit mindestens einem lokalen DC-Bus verbunden ist, der zwischen jeder jeweiligen Energiespeichereinheit und einer der mindestens zwei Antriebseinheiten erzeugt wird; und/oder die Leistungsquelle eine der mindestens einen Hilfsleistungsversorgung ist.

11. Verfahren gemäß Anspruch 10, wobei der verbesserte Antriebsmodus in einen anderen Lademodus modifiziert wird, indem die Energiespeichereinheit (13-1) unter Verwendung von Leistung geladen wird, die von der Hilfsleistungsversorgung (14-1) bereitgestellt wird, wenn keine Bodenladeausrüstung mit der Ladeeingangsverbindung (25) verbunden ist.

12. Verfahren gemäß einem der Ansprüche 9-11, wobei, wenn ein Unterschied im Ladezustand, SOC, zwischen den Energiespeichereinheiten (13) besteht, wenn der Lademodus ausgewählt ist, die Steuereinheit (1) den SOC der jeweiligen Energiespeichereinheit (13) überwacht und gestuftes Laden anwendet, und wobei, wenn gestuftes Laden angewendet wird, Energiespeichereinheiten (13) basierend auf dem SOC jeder jeweiligen Energiespeichereinheit sequentiell mit dem gemeinsamen DC-Bus verbunden werden.

13. Ein Computerprogramm zum Neukonfigurieren der Leistungsverteilung in einem Flugzeug, das Anweisungen beinhaltet, die, wenn sie auf mindestens einem Prozessor ausgeführt werden, den mindestens einen Prozessor veranlassen, das Verfahren gemäß einem der Ansprüche 9-10 oder 11-12 auszuführen.

14. Ein computerlesbares Speichermedium, das ein Computerprogramm zum Neukonfigurieren von Leistungsverteilungen in einem Flugzeug gemäß Anspruch 13 trägt.

15. Ein Flugzeug, das ein System gemäß einem der Ansprüche 1-8 beinhaltet.

## Revendications

1. Un système (10 ; 20 ; 30) pour reconfigurer une distribution de puissance dans un aéronef, où le système comprend au moins deux unités de propulsion (3), au moins deux unités de stockage d'énergie (13), un réseau d'interconnexion (15) et une unité de commande (1), où le réseau d'interconnexion (15) est configuré pour alterner entre différents modes de fonctionnement comprenant un mode propulsion et un mode recharge, où le réseau d'interconnexion (15) comprend des commutateurs qui sont commandés par l'unité de commande (1) pour alterner entre les modes de fonctionnement, où le réseau d'interconnexion est configuré pour :
- créer un bus à courant continu, CC, local (4) entre chaque unité de stockage d'énergie (13) respective et l'une des au moins deux unités de propulsion (3) lors d'un fonctionnement en mode propulsion ; et
- connecter les au moins deux unités de stockage d'énergie (13) à un bus CC commun (6) configuré pour recevoir de la puissance provenant d'une source de puissance lors d'un fonctionnement en mode recharge, où la source de puissance est un équipement de recharge au sol configuré pour fournir de la puissance au système via une connexion d'entrée de recharge (25) connectée au réseau d'interconnexion (15),
où le système comprend en outre une pluralité de convertisseurs CC/CC (5a-d), chacun connecté à une unité de stockage d'énergie respective desdites au moins deux unités de stockage d'énergie (13-1, 13-2, 13-3, 13-4) via un commutateur séparé du réseau d'interconnexion (15), où chaque convertisseur CC/CC (5a-d) est configuré pour mettre sous tension un bus CC basse tension du système, lequel bus CC basse tension est configuré pour approvisionner en puissance des charges critiques et non critiques (17a, 17b) de l'aéronef pendant le mode propulsion et le mode recharge.

2. Le système selon la revendication 1, où le système comprend en outre au moins un bloc d'approvisionnement en puissance auxiliaire (14), et le réseau d'interconnexion (15) est en outre configuré pour fonctionner dans un mode propulsion amélioré où l'un des au moins un bloc d'approvisionnement en puissance auxiliaire (14) est connecté à au moins un bus CC local (4) créé entre chaque unité de stockage d'énergie (13) respective et l'une des au moins deux unités de propulsion (3) ; et/ou la source de puissance est l'un des au moins un bloc d'approvisionnement en puissance auxiliaire (14).

3. Le système selon n'importe lesquelles des revendications 1 à 2, où les commutateurs comprennent des commutateurs de stockage d'énergie (21 ; 31) configurés pour connecter/déconnecter chaque unité de stockage d'énergie à un bus CC local (4) ou un bus CC commun (6).

4. Le système selon n'importe lesquelles des revendications 1 à 3, où les commutateurs comprennent en outre des commutateurs de propulsion (23 ; 33) configurés pour connecter/déconnecter chaque unité de propulsion (3) de chaque bus CC local (4) respectif en mode propulsion ou du bus CC commun en mode recharge.

5. Le système selon la revendication 2, où les commutateurs comprennent en outre des commutateurs auxiliaires (22) configurés pour connecter/déconnecter chaque bloc d'approvisionnement en puissance auxiliaire (14) du bus CC local pendant le mode propulsion amélioré ou du bus CC commun en mode recharge.

6. Le système selon n'importe lesquelles des revendications 1 à 5, où les commutateurs comprennent en outre des commutateurs de recharge (24 ; 34) configurés pour créer le bus CC commun (6) en mode recharge.

7. Le système selon n'importe lesquelles des revendications 1 à 6, où le bus CC local et le bus CC commun comprennent une ligne d'alimentation en puissance positive et une ligne d'alimentation en puissance négative, et les commutateurs du réseau d'interconnexion sont agencés sur la ligne de puissance positive et/ou la ligne de puissance négative.

8. Le système selon n'importe lesquelles des revendications 1 à 7, où le réseau d'interconnexion est configuré pour créer le bus CC commun (6) en utilisant chaque bus CC local (4) respectif.

9. Un procédé pour reconfigurer une distribution de puissance dans un aéronef comprenant un système comprenant au moins deux unités de propulsion (3), au moins deux unités de stockage d'énergie (13), un réseau d'interconnexion (15) et une unité de commande (1), où le réseau d'interconnexion (15) comprend des commutateurs qui sont commandés par l'unité de commande (1) pour alterner entre des modes de fonctionnement, où le procédé comprend les étapes consistant à :
- sélectionner (S10) un mode de fonctionnement dans le groupe constitué : d'un mode propulsion et d'un mode recharge ; et
- reconfigurer le réseau d'interconnexion vers le mode de fonctionnement sélectionné, où la reconfiguration comprend le fait :
- de créer (S11) un bus à courant continu, CC, local entre chaque unité de stockage d'énergie respective et l'une des au moins deux unités de propulsion lorsque le mode de fonctionnement sélectionné est le mode propulsion ; et
- de connecter (S15) les au moins deux unités de stockage d'énergie (13) à un bus CC commun (6) configuré pour recevoir de la puissance provenant d'une source de puissance lorsque le mode de fonctionnement sélectionné est le mode recharge, où la source de puissance est un équipement de recharge au sol configuré pour fournir de la puissance au système via une connexion d'entrée de recharge (25) connectée au réseau d'interconnexion (15),
où le système comprend en outre une pluralité de convertisseurs CC/CC (5a-d), chacun connecté à une unité de stockage d'énergie respective desdites au moins deux unités de stockage d'énergie (13-1, 13-2, 13-3, 13-4) via un commutateur séparé du réseau d'interconnexion (15), où chaque convertisseur CC/CC (5a-d) met sous tension un bus CC basse tension du système, lequel bus CC basse tension approvisionne en puissance des charges critiques et non critiques (17a, 17b) de l'aéronef pendant le mode propulsion et le mode recharge.

10. Le procédé selon la revendication 9, où le système comprend en outre au moins un bloc d'approvisionnement en puissance auxiliaire, et le groupe de modes de fonctionnement comprend en outre : un mode propulsion amélioré où l'un des au moins un bloc d'approvisionnement en puissance auxiliaire est connecté à au moins un bus CC local créé entre chaque unité de stockage d'énergie respective et l'une des au moins deux unités de propulsion ; et/ou la source de puissance est l'un des au moins un bloc d'approvisionnement en puissance auxiliaire.

11. Le procédé selon la revendication 10, où le mode propulsion amélioré est modifié en un autre mode recharge en rechargeant l'unité de stockage d'énergie (13-1) en utilisant de la puissance fournie par le bloc d'approvisionnement en puissance auxiliaire (14-1) lorsqu'un équipement de recharge au sol n'est pas connecté à la connexion d'entrée de recharge (25).

12. Le procédé selon n'importe laquelle des revendications 9 à 11, où s'il y a une différence d'état de recharge, SOC, entre les unités de stockage d'énergie (13) lorsque le mode recharge est sélectionné, l'unité de commande (1) surveille le SOC de l'unité de stockage d'énergie (13) respective et applique une recharge échelonnée, et où lorsqu'une recharge échelonnée est appliquée, des unités de stockage d'énergie (13) sont séquentiellement connectées au bus CC commun sur la base du SOC de chaque unité de stockage d'énergie respective.

13. Un programme informatique pour reconfigurer une distribution de puissance dans un aéronef, comprenant des instructions qui, lorsqu'elles sont exécutées sur au moins un processeur, amènent l'au moins un processeur à mettre en œuvre le procédé selon n'importe lesquelles des revendications 9 à 10 ou 11 à 12.

14. Un support de stockage lisible par ordinateur portant un programme informatique pour reconfigurer des distributions de puissance dans un aéronef selon la revendication 13.

15. Un aéronef comprenant un système selon n'importe laquelle des revendications 1 à 8.
